Europäisches Patentamt

(19) European Patent Office

Office européen des brevets

(11) Numéro de publication : **0 017 664**
**B1**

(12) **FASCICULE DE BREVET EUROPÉEN**

(45) Date de publication du fascicule du brevet :
05.01.83

(21) Numéro de dépôt : **79104838.2**

(22) Date de dépôt : **03.12.79**

(51) Int. Cl.³ : **G 01 F 23/28, C 21 B 7/24**

(54) **Dispositif de montage d'une sonde radar pour fours à cuve.**

(30) Priorité : **13.04.79 LU 81158**

(43) Date de publication de la demande :
**29.10.80 Bulletin 80/22**

(45) Mention de la délivrance du brevet :
**05.01.83 Bulletin 83/01**

(84) Etats contractants désignés :
**AT BE DE FR GB IT NL SE**

(56) Documents cités :
**DE B 2 417 222**
**DE B 2 658 443**

(73) Titulaire : **PAUL WURTH S.A.**
**32 rue d'Alsace**
**L-1122 Luxembourg (LU)**

(72) Inventeur : **Kremer, Victor**
**27 rue Ermesinde**
**Luxembourg (LU)**

(74) Mandataire : **Meyers, Ernest et al**
**c/o FREYLINGER & ASSOCIES Postfach 1153, 46 rue du Cimetière**
**Luxemburg (LU)**

Dispositif de montage d'une sonde radar pour fours à cuve

La présente invention concerne un dispositif de montage d'une sonde radar pour fours à cuve constituée essentiellement par une unité électronique disposée à l'extérieur du four, une antenne émettrice et réceptrice montée au-dessus de la surface de chargement et reliée par un guide d'ondes à l'unité électronique, ainsi que par des moyens pour faire osciller l'antenne en vue d'un balayage de la surface de chargement.

Une sonde de ce genre est décrite dans le brevet LU-A-70 310. Une telle sonde a l'avantage de pouvoir fournir comme résultat de mesure une courbe représentant le profil de la surface de chargement, raison pour laquelle elle est généralement désignée par « profilomètre ». Une telle sonde constitue bien entendu un progrès technique considérable par rapport aux sondes classiques, telles que les sondes mécaniques verticales qui ne fournissent qu'un seul point de mesure, c'est-à-dire qu'il faut avoir recours à une sonde par point de mesure, autrement dit, un grand nombre de sondes si l'on veut avoir une représentation plus ou moins acceptable du profil de la surface de chargement. Un tel profilomètre complète avantageusement un équipement de chargement à goulotte rotative, généralement connu sous le nom de « gueulard sans cloches ». Dans ce type de chargement, un tel profilomètre convient notamment pour une commande automatique, c'est-à-dire que l'on peut effectuer automatiquement et périodiquement, par exemple après chaque dépôt d'une couche de chargement ou selon un programme bien déterminé, une mesure du profil de la surface de chargement, dont les résultats peuvent servir à la commande ou à la correction de l'entraînement de la goulotte de distribution pour le dépôt ultérieur du matériau de chargement.

Toutefois, si ces profilomètres radar ont pu être testés avec succès sur des stands d'essai, ils n'ont pas encore pu être rendus opérationnels sur des hauts fourneaux. En effet, leur mise en service impliquait la solution de différents problèmes d'ordre mécanique qui n'ont pu être résolus jusqu'à présent.

Un de ces problèmes est celui de l'isolation de la sonde par rapport à l'intérieur du four. En effet, pour les besoins d'entretien de la sonde, celle-ci doit pouvoir être démontée sans que ce démontage provoque une perturbation de l'opération du four, ce qui implique la présence d'un moyen permettant d'isoler, de manière hermétique, la sonde par rapport à l'intérieur du four. Or, vu que l'antenne radar émet un faisceau divergeant vers la surface de chargement et que ce faisceau effectue en outre un mouvement de balayage, l'ouverture dans la paroi supérieure du four nécessaire au passage du faisceau conique des ondes électro-magnétiques doit être relativement grande, ceci d'autant plus que le diamètre d'une telle antenne parabolique ne peut être inférieur à 300 mm. Le problème constitue donc à pouvoir obturer de manière étanche et à dégager une telle ouverture sans perturber ni le fonctionnement de la sonde ni l'opération du four.

Un second problème est celui du maintien de la propreté de l'antenne. En effet, celle-ci étant forcément exposée aux conditions régnant au-dessus de la surface de chargement, il se produit très rapidement un dépôt de poussière sur le miroir parabolique, à un tel point que la sonde devient inutilisable après quelques jours d'exposition.

La présente invention vise à résoudre ces problèmes, autrement dit, le double objectif de pouvoir isoler l'antenne, de manière étanche, au moyen d'un dispositif simple et peu encombrant et de maintenir l'antenne suffisamment propre de façon à pouvoir fonctionner correctement pendant une durée raisonnable. A cet effet, l'invention prévoit un dispositif de montage d'une sonde radar du genre décrit dans le préambule qui est essentiellement caractérisé en ce que l'antenne est fixée à l'extrémité d'une tige déplaçable dans le sens longitudinal entre une position de repos dans laquelle l'antenne se trouve dans une cavité prévue à cet effet dans la paroi du four et une position opérative dans laquelle l'antenne est dégagée de ladite cavité et en ce qu'il est prévu une vanne pour isoler ladite cavité du four lorsque l'antenne occupe la position de repos.

La tige est, de préférence, constituée par une tige creuse du piston d'un vérin fixé sur la paroi de ladite cavité, la tige traversant ce vérin de part et d'autre et étant solidaire, du côté opposé à l'antenne, de l'unité électronique, le guide d'ondes reliant l'antenne à l'unité électronique étant prévue à l'intérieur de la tige creuse.

Les moyens pour faire osciller l'antenne sont constitués par un moteur agissant sur ladite tige pour lui communiquer un mouvement pivotant autour de son axe longitudinal.

La vanne est constituée par un registre coulissant, connu en soi, déplaçable sous l'action d'un vérin, entre deux brides séparant la cavité de l'intérieur du four.

L'ouverture entre la cavité et l'intérieur du four ne doit être que légèrement supérieure au diamètre de l'antenne afin de permettre le passage de celle-ci et son dégagement de la cavité, contrairement à l'état de la technique selon lequel la grandeur de cette ouverture dépend de la divergence du faisceau et de l'amplitude d'oscillation de l'antenne. Cette condition est maintenant supprimée grâce au mouvement longitudinal de la tige supportant l'antenne et il est désormais possible de s'en tirer avec une vanne beaucoup plus petite qu'auparavant, d'où un avantage financier, moins d'encombrement, moins de poids et moins de problèmes d'étanchéité.

D'autres particularités et caractéristiques ressortiront de la description d'un mode de réalisation avantageux présenté ci-dessous, à titre d'illustration, en référence aux figures annexées dans lesquelles :

La figure 1 montre schématiquement une coupe verticale d'un dispositif de montage d'une sonde selon la présente invention, l'antenne occupant une position de repos et

La figure 2 est une vue analogue, l'antenne occupant une position opérative.

Sur les figures on voit une antenne émettrice et réceptrice 4 fixée à l'une des extrémités d'une tige creuse 8 dont l'autre extrémité est solidaire d'une unité électronique 6. L'antenne 4 est reliée à l'unité électronique 6 par un ou plusieurs guides d'ondes, non montrés, traversant le creux de la tige 8. L'unité électronique 6 comporte les composants nécessaires au fonctionnement de l'antenne 4 et au traitement et à la transformation des signaux de mesure.

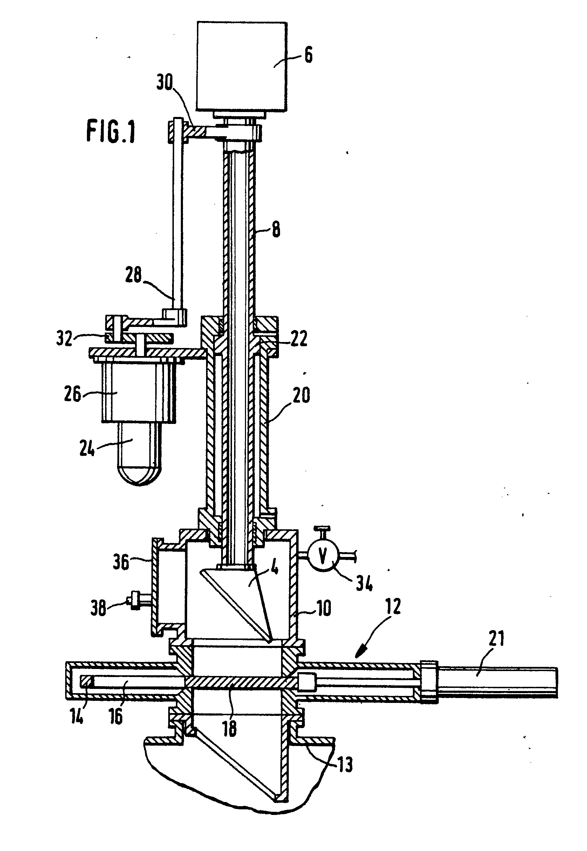

Dans la position représentée sur la figure 1, l'antenne 4 se trouve à l'intérieur d'une cavité 10 à fond ouvert et séparée du four indiqué schématiquement par 13, au moyen d'une vanne 12 destinée à isoler la cavité 10 de l'intérieur du four lorsque l'antenne occupe la position selon la figure 1. La vanne 12 comporte un registre 14, de préférence du type « vanne lunette », connu en soi, comprenant un disque plein 18 pour fermer la cavité 10 et une partie ouverte 16 pour ouvrir la cavité 10. Ce registre 14 est actionné au moyen d'un vérin hydraulique 21.

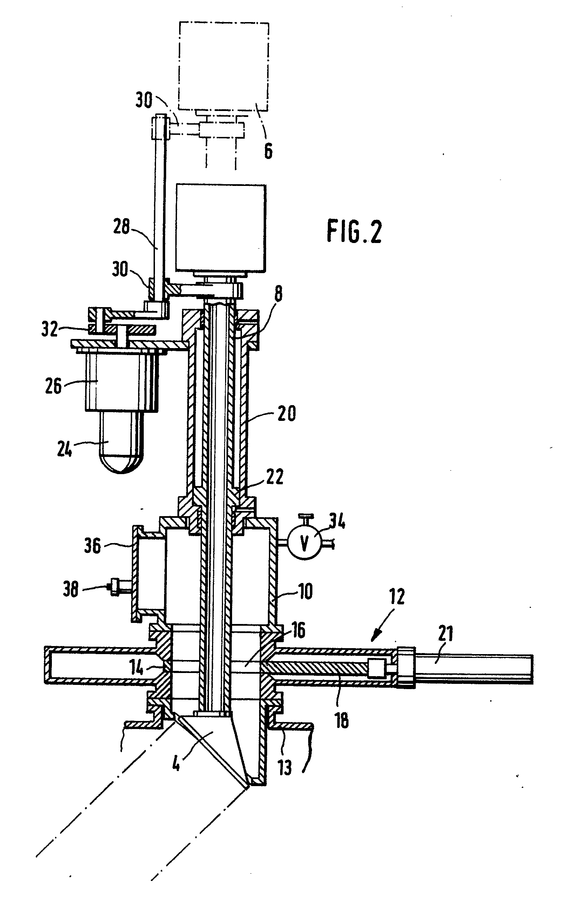

Comme le montrent les figures, la tige 8 traverse un vérin 20, de préférence pneumatique, dont elle constitue en même temps la tige par le fait qu'elle est solidaire du piston 22. Ce vérin 20 permet le déplacement de l'antenne 4 entre les deux positions illustrées sur les figures 1 et 2 lorsque la vanne 12 occupe la position de la figure 2. Il est bien entendu prévu des moyens empêchant le fonctionnement du vérin 20 lorsque la vanne 12 est fermée, c'est-à-dire dans la position de la figure 1.

Le mouvement oscillant de l'antenne 4 nécessaire pour effectuer le balayage de la surface de chargement lui est communiqué par le moteur 24. Dans le mode de réalisation représenté il s'agit d'un moteur électrique 24 associé à un réducteur 26 qui fait tourner un bras 32. Le mouvement rotatif du bras 32 est transformé en mouvement pivotant de la tige 8 autour de son axe longitudinal par l'entremise d'une manivelle 28 et d'un bras de liaison 30 fixé sur la tige 8. Comme le montrent les figures, ce bras de liaison 30 coulisse sur la manivelle 28 afin de permettre également le mouvement coulissant longitudinal de la tige 8 sous l'action du vérin 20. Etant donné que le système est conçu pour que le moteur 24 ne fonctionne que dans la position de la figure 2, il n'y a pratiquement pas de force de flexion due à la longueur de la manivelle 28.

La référence 34 illustre schématiquement une vanne pour envoyer un gaz inerte refroidi dans la cavité 10 afin d'empêcher ou de réduire, par une circulation à contresens, la pénétration de poussières dans cette cavité lorsque l'antenne 14 se trouve dans la position selon la figure 2.

Il est également possible de prévoir un système de nettoyage de l'antenne 4 au moyen d'une ou plusieurs buses, non montrées, envoyant un fluide sous pression sur la surface réflectrice de l'antenne 4. En outre, il est possible d'introduire un fluide de refroidissement et de nettoyage de l'antenne à travers la tige 8.

La cavité 10 est munie d'un couvercle 36 conçu pour être facilement démonté et remonté afin de pouvoir démonter et dégager l'antenne 4 dans la position selon la figure 1, ou procéder au nettoyage de l'antenne, sans devoir démonter d'autres pièces. Le couvercle 36 est, en outre, pourvu d'un regard 38 permettant l'inspection de l'antenne dans la position de la figure 1, sans devoir démonter quoi que ce soit.

Le fonctionnement de la sonde en vue d'effectuer un relevé du profil de la surface de chargement est expliqué dans le brevet luxembourgeois N° 70 310. L'antenne 4 est de préférence orientée de telle manière que, lorsque le moteur 24 est actionné dans la position de la figure 2 pour faire osciller l'antenne autour de l'axe longitudinal de la tige 8, le balayage se fasse diamétralement sur la surface de chargement. Il est même possible de prévoir une fixation ajustable entre l'antenne 4 et la tige 8 afin de changer l'orientation de l'antenne 4 et de pouvoir effectuer des balayages suivant différentes courbes séparées et relever ainsi plusieurs lignes de profil.

Le registre 14, notamment son orifice de passage 16, doit être juste assez grand pour permettre le passage de l'antenne 4 de l'une des positions montrées à l'autre. Si, comme d'après l'état de la technique, l'antenne 4 devait effectuer le sondage dans la position de la figure 1, la vanne 12 devrait, bien entendu, être beaucoup plus grande afin de permettre l'émission et la réception d'un faisceau divergent et oscillant. Dans le mode de réalisation représenté, il suffit d'une ouverture d'un diamètre de 350 à 450 mm entre la cavité 10 et l'intérieur du four pour une antenne standard avec un réflecteur de 300 mm de diamètre. Pour la même antenne, il fallait d'après l'état de la technique, une ouverture, de forme sensiblement rectangulaire, de 900 sur 1 800 mm. Il était donc nécessaire d'avoir recours à des vannes énormes, ce qui présente de sérieux problèmes d'étanchéité et d'encombrement. En revanche, selon la présente invention, la vanne 12 étant d'une taille modeste, l'encombrement résultant du montage d'un profilomètre n'est pas très encombrant, ce qui permet de prévoir deux ou même plusieurs de ces profilomètres au-dessus de la surface de chargement. Avec deux profilomètres, il est notamment possible d'effectuer deux relevés du profil suivant des directions perpendiculaires, ce qui fournit des renseignements suffisamment précis sur le profil de la surface de chargement.

**Revendications**

1. Dispositif de montage d'une sonde radar pour four à cuve constitué essentiellement par une unité électronique (6) disposée à l'extérieur du four, une antenne émettrice et réceptrice (4) montée au-dessus de la surface de chargement et reliée par un guide d'ondes à l'unité électronique (6), ainsi que par des moyens pour faire osciller l'antenne en vue d'un balayage de la surface de chargement, caractérisé en ce que l'antenne est fixée à l'extrémité d'une tige déplaçable (8) dans le sens longitudinal entre une position de repos dans laquelle l'antenne (4) se trouve dans une cavité (10) prévue à cet effet dans la paroi du four et une position opérative dans laquelle l'antenne (4) est dégagée de ladite cavité (10) et en ce qu'il est prévu une vanne (12) pour isoler ladite cavité (10) du four lorsque l'antenne (4) occupe la position de repos.

2. Dispositif selon la revendication 1, caractérisé en ce que la tige (8) est constituée par une tige creuse de piston d'un vérin (20) fixé sur la paroi de ladite cavité (10), la tige (8) traversant ce vérin (20) de part et d'autre et étant solidaire, du côté opposé à l'antenne (4), de l'unité électronique (6), le guide d'ondes reliant l'antenne (4) à l'unité électronique (6) étant prévu à l'intérieur de la tige creuse (8).

3. Dispositif selon l'une des revendications 1 ou 2, caractérisé en ce que les moyens pour faire osciller l'antenne (4) sont constitués par un moteur agissant sur ladite tige (8) pour lui communiquer un mouvement pivotant autour de son axe longitudinal.

4. Dispositif selon la revendication 3, caractérisé en ce que le moteur est un moteur électrique (24) et en ce que la transmission du mouvement vers la tige (8) est réalisée par l'intermédiaire d'un réducteur (26), d'une manivelle (28) ayant un bras parallèle à ladite tige (8) et d'un bras intermédiaire (30) fixé sur la tige (8) et coulissant sur ledit bras parallèle.

5. Dispositif selon l'une des revendications 1 à 4, caractérisé en ce que la vanne (12) est constituée par un registre coulissant (14) connu en soi, déplaçable sous l'action d'un vérin (21) entre deux brides séparant la cavité (10) de l'intérieur du four.

6. Dispositif selon la revendication 1, caractérisé en ce que ladite cavité (10) est pourvue d'un couvercle (36) dont le démontage permet le dégagement de l'antenne (4) de la cavité (10) ainsi que le nettoyage de l'antenne (4) sans devoir la démonter.

7. Dispositif selon la revendication 6, caractérisé en ce que ledit couvercle (36) est pourvu d'un regard (38) pour l'inspection de l'antenne (4) lorsque celle-ci se trouve en position de repos.

8. Dispositif selon l'une des revendications 1 à 7, caractérisé par des moyens (34) pour injecter un gaz inerte sous pression à l'intérieur de ladite cavité (10).

nace, above the charging surface, and connected by a wave guide to the electronic unit (6), and also of means for causing the aerial to oscillate, characterized by the fact that the aerial is affixed to the end of a bar (8) movable in the longitudinal direction between a position of rest in which the aerial (4) is situated in a cavity (10) provided for this purpose in the wall of the furnace and an operative position in which the aerial (4) is outside the said cavity (10) and by the fact that a valve (12) is provided for the purpose of isolating the said cavity (10) from the furnace when the aerial (4) occupies the position of rest.

2. Device in accordance with Claim 1, characterized by the fact that bar (8) consists of a hollow bar of the piston of a jack (20) affixed to the wall of the said cavity (10), the bar (8) passing through this jack (20) from one side to the other and being integral, on the side opposite to the aerial (4), with the electronic unit (6), the wave guide which connects the aerial (4) to the electronic unit (6) being positioned inside the hollow bar (8).

3. Device in accordance with one of the Claims 1 and 2, characterized by the fact that the means by which the aerial (4) is caused to oscillate consist of a motor acting on the said bar (8) in order to cause it to perform a pivoting movement about its longitudinal axis.

4. Device in accordance with Claim 3, characterized by the fact that the motor is an electric motor (24) and that the transmission of the movement to the bar (8) is effected via a reduction gearing (26), a crank (28) of which the arm is parallel to the said bar (8) and an intermediate arm (30) affixed to the bar (8) and sliding on the said parallel arm.

5. Device in accordance with one of the Claims 1 to 4, characterized by the fact that the valve (12) consists of a sliding register (14) known *per se* and movable, under the action of a jack (21) between two flanges separating the cavity (10) from the interior of the furnace.

6. Device in accordance with Claim 1, characterized by the fact that the said cavity (10) has a cover (36) of which the removal enables the aerial (4) to be released from the cavity (10) and also enables the aerial (4) to be cleaned without having to dismantle it.

7. Device in accordance with Claim 6, characterized by the fact that the said cover (36) is provided with an inspection hole (38) enabling the aerial (4) to be inspected when it occupies the position of rest.

8. Device in accordance with one of the Claims 1-7, characterized by means (34) for the injection of an inert gas under pressure into the interior of the said cavity (10).

## Claims

1. Device for mounting a radar probe for shaft furnaces, essentially consisting of an electronic unit (6) positioned outside the furnace, an emitter and receiver aerial (4) positioned inside the fur-

## Ansprüche

1. Montagevorrichtung für Radarsonden an Schachtöfen, im wesentlichen bestehend aus einer elektronischen, ausserhalb des Ofens angeordneten Einheit (6), einer oberhalb des Schmelzbetts angeordneten Sende- und Empfangsantenne (4), welche durch einen Wellenleiter mit der elektronischen Einheit (6) verbunden ist, sowie Mitteln zum Schwenken der Antenne (4) zwecks Abtastens der Schmelzbettoberfläche, dadurch gekennzeichnet, dass die Antenne an der Extremität einer Stange (8) befestigt ist, welche in Längsrichtung zwischen einer Ruhestellung, in welcher die Antenne (4) sich in einer hierfür in der Ofenwand vorgesehenen Kammer (10) befindet, und eine Arbeitsstellung, in welcher die Antenne (4) aus der Kammer (10) herausgefahren ist, verschoben werden kann, und dass ein Absperrorgan (12) vorgesehen ist, um die Kammer (10) vom Ofen abzuschliessen, wenn die Antenne (4) sich in Ruhestellung befindet.

2. Vorrichtung nach Anspruch 1, dadurch gekennzeichnet, dass die Stange (8) aus der hohlen Kolbenstange eines an der Wand der Kammer (10) befestigten Linearmotors (20) gebildet wird, wobei die Stange (8) diesen Linearmotor (20) beidseitig durchquert und an dem zur Antenne (4) entgegengesetzten Ende mit der elektronischen Einheit (6) eine mechanische Einheit bildet, und der die Antenne (4) mit der elektronischen Einheit (6) verbindende Wellenleiter im Innern der Hohlstange (8) vorgesehen ist.

3. Vorrichtung nach den Ansprüchen 1 und 2, dadurch gekennzeichnet, dass die Mittel zum Schwenken der Antenne (4) aus einem Motor bestehen, welcher auf die Stange (8) einwirkt und ihr eine Schwenkbewegung um ihre Längsachse vermittelt.

4. Vorrichtung nach Anspruch 3, dadurch gekennzeichnet, dass der Motor ein Elektromotor (24) ist und die Übertragung der Bewegung auf die Stange (8) durch die Zwischenschaltung eines Untersetzungsgetriebes (26), einer Kurbel (28) mit einem zur Stange (8) parallelen Arm, und eines an der Stange 8 befestigten Zwischenarms (30) realisiert ist, welcher auf dem parallelen Arm verschieblich ist.

5. Vorrichtung nach den Ansprüchen 1 bis 4, dadurch gekennzeichnet, dass das Abschlussorgan (12) aus einem an sich bekannten Flachschieber (14) steht, welcher unter der Einwirkung eines Linearmotors (21) zwischen zwei, die Kammer (10) vom Ofeninnern trennenden Flanschen, verschoben werden kann.

6. Vorrichtung nach Anspruch 1, dadurch gekennzeichnet, dass die Kammer (10) mit einem Deckel (36) versehen ist, nach dessen Demontage die Antenne (4) aus der Kammer (10) entfernt werden kann, sowie die Antenne (4) ohne Demontage gereinigt werden kann.

7. Vorrichtung nach Anspruch 6, dadurch gekennzeichnet, dass der Deckel (36) mit einem Sehloch (38) zur Inspektion der Antenne (4) versehen ist, wenn diese sich in Ruhestellung befindet.

8. Vorrichtung nach den Ansprüchen 1 bis 7, gekennzeichnet durch Mittel (34) zum Einblasen eines inerten Druckgases in das Innere der Kammer (10).

FIG.1

FIG.2